# EUROPÄISCHE PATENTSCHRIFT

(11) **EP 1 449 584 B1**
(45) Veröffentlichungstag und Bekanntmachung des Hinweises auf die Patenterteilung: **16.09.2009**
(21) Anmeldenummer: 03450278.1
(22) Anmeldetag: 12.12.2003
(51) Int. Cl.: B01J 35/04, C04B 38/00

(54) **Stapelbarer Formkörper sowie dessen Verwendung**
Stackable shaped body and its use
Corps moulé empilable et son utilisation

(30) Priorität: 19.12.2002 AT 85502 U
(43) Veröffentlichungstag der Anmeldung: 25.08.2004
(73) Patentinhaber: Dipl.-Ing. Roitner, Johann, 8051 Graz (AT)
(72) Erfinder: Dipl.-Ing. Roitner, Johann, 8051 Graz (AT)

(56) Entgegenhaltungen:
- WO-A-99/48597
- US-A- 3 505 030
- US-A- 5 250 764
- US-A- 5 505 910
- US-A- 5 857 140
- PATENT ABSTRACTS OF JAPAN vol. 014, no. 171 (C-0706), 3. April 1990 (1990-04-03) & JP 02 021947 A (MITSUBISHI HEAVY IND LTD), 24. Januar 1990 (1990-01-24)

## Beschreibung

Die vorliegende Erfindung bezieht sich auf einen stapelbaren Formkörper mit einer Mehrzahl von im Inneren im wesentlichen parallel zueinander verlaufenden, durchgehenden Kanälen und mit einem von zu den Kanälen im wesentlichen parallel verlaufenden Erzeugenden gebildeten Außenumfang, wobei wenigstens eine Endfläche, an welcher die durchgehenden Kanäle münden, mit von einer auf die Achsen der Kanäle normal stehenden vorragenden Erhebungen und/oder gegenüber dieser Ebene abgesetzten Vertiefungen ausgebildet ist, sowie auf eine Verwendung eines derartigen Formkörpers.

Es sind unterschiedliche Ausbildungen von Formkörpern bekannt, welche mit im wesentlichen parallel zueinander verlaufenden, durchgehenden Kanälen bzw. Durchtrittsöffnungen versehen sind und damit eine große Oberfläche pro Volumseinheit besitzen, wobei derartige Formkörper für chemische, physikalische und/oder biologische Austauschprozesse zwischen einem Medium, welches die einzelnen Kanäle bzw. Durchtrittsöffnungen durchströmt, und der Oberfläche des Formkörpers dienen.

Der WO 99/48597 ist ein Katalysatorkörper mit einer Einström- und einer Ausströmseite und mit einer Vielzahl von durchströmbaren Längskanälen entnehmbar, wobei die durchströmbaren Längskanäle voneinander unterschiedliche Kanalquerschnitte aufweisen, um ein Verlegen des Katalysatorkörpers hintanzuhalten. Ein derartiger Katalysatorkörper soll, um große Katalysatoren herzustellen, aus fertigungstechnischen Gründen zusammensetzbar sein und so ausgebildet sein, daß Vertiefungen in dem Katalysatorkörper so ausgebildet werden, daß ein tiefster Punkt der den Katalysator ausbildenden Katalysatorelemente so zu liegen kommt, daß sich eine trichterförmige Vertiefung ergibt, um sicherzustellen, daß im einströmenden Gas enthaltene große Einzelpartikel in einen Kanal größerem Querschnitts eingeblasen werden, um ein Verlegen der Kanäle der den Katalysator ausbildenden Einzelelemente zu vermeiden. Ein derartiger Katalysator, wie er der WO 99/48597 entnehmbar ist, ist insbesondere für den Einsatz in Abgaskanälen von Verbrennungsanlagen geeignet.

In technischen Anwendungen sind beispielsweise prismatische oder zylindrische Formkörper bekannt, welche im wesentlichen gerade und zueinander im wesentlichen parallele Kanäle aufweisen, so daß die Kanalachsen im wesentlichen parallel zur Erzeugenden des Formkörpers sind, wobei in diesem Zusammenhang beispielsweise auf die EP-B 0 472 605, die US-PS 3 983 283, die US-PS 5 259 190, die US-PS 5 393 499, die US-PS 3 790 654 oder die DE-A 36 14 347 verwiesen wird.

Die JP 0202 1947 zeigl einen Katalysatorkörper, der durch Vorspringende Wände gekennzeichnet ist, um das verkopfen der Kanäle zu verzögern.

Der Kern bzw. die Matrix derartiger Formkörper kann entsprechend den Anforderungen beispielsweise aus Kunststoff, Metall, Keramik oder aus anderen organischen oder anorganischen Stoffen bestehen, wobei darüber hinaus derartige Formkörper entweder als Einzelkörper oder in einer Packung bzw. Vielzahl von parallel und/oder hintereinander angeordneten Körper eingesetzt werden.

Formkörper der eingangs genannten Art mit einer derartigen Mehrzahl von durchgehenden Kanälen bzw. Durchtrittsöffnungen besitzen einerseits den Vorteil, daß sie einem durchströmenden Fluid, beispielsweise einer Flüssigkeit oder einem Gas, eine sehr hohe Oberfläche zur Verfügung stellen, und insbesondere bei einer im wesentlichen gerad-linigen Anordnung, auch einen entsprechend geringen Durchströmwiderstand bieten.

Derartige Formkörper können, insbesondere fertigungstechnisch bedingt, wirtschaftlich nur in bestimmten Größen gefertigt werden, so daß es bei größeren Gas- bzw. Flüssigkeitsströmen notwendig ist, diese Einzelkörper in einer Packung, die sowohl aus parallelgeschalteten Formkörpern als auch aus in Serie geschalteten Formkörpern bestehen können, anzuordnen. Derartige Packungen sind beispielsweise als Katalysatoren sowohl im Bereich von Großverbrennungsanlagen als auch als Regeneratoren für Verbrennungsprozesse und Erhitzungsprozesse zum Zweck der Wärmerückgewinnung bekannt.

Wenn nun derartige einzelne, üblicherweise prismatische Formkörper mit ebenen Grund- und Deckenflächen, durch die die Strömung eintritt bzw. austritt, in Strömungsrichtung hintereinander angeordnet werden müssen, um insgesamt ein ausreichendes Austauschvolumen bzw. eine ausreichende Austauschoberfläche zu erreichen, also in Serie geschaltet werden müssen, ergeben sich Strömungsprobleme, die durch die bei derartigen Formkörpern üblicherweise geringen Druckverluste verschärft werden.

Werden die Formkörper unmittelbar hintereinander oder bei vertikalen Strömungen übereinander angeordnet, kommt es häufig zu stark unterschiedlichen Strömungsgeschwindigkeiten innerhalb der Gesamtpackung bzw. innerhalb des Packungsquerschnitts, so daß sich in Strömungsrichtung sogenannte Strähnen ausbilden, in denen hohe Strömungsgeschwindigkeiten herrschen, und andererseits Zonen entstehen, in denen die Strömungsgeschwindigkeit sehr gering ist. Derartige Strähnenbildungen haben ihre Ursache einerseits in einer nicht optimierten Anströmung der Gesamtpackung und in den aufgrund der Fertigungstoleranzen gegebenenfalls unterschiedlich großen Kanälen, andererseits aber auch in hohem Maß in der fehlenden Querverteilung der Strömung innerhalb der Packung. Dies deshalb, weil die Einzelkanäle gegeneinander verschlossen sind und fluchtend oder annähernd fluchtend angeordnet sind und ein Abstand zwischen einzelnen Formkörpern nicht vorhanden ist oder sehr gering ist, so daß die aus dem Einzelkanal eines vorgeschalteten Formkörpers austretende Strömung unmittelbar in den etwa auf derselben Achse liegenden Einzelkanal eines nachgeschalteten Formkörpers ohne spezielle Umlenkung oder Impulsänderung eindringt.

Es wurden diesbezügliche Messungen vorgenommen, die eine hohe Korrelation der Strömungsgeschwindigkeiten zwischen Eintritt der Strömung in eine aus mehreren in Serie geschalteten Lagen solcher Formkörper bestehenden Packung und Austritt der Strömung aus der Packung an derselben Querschnittsposition der Packung zeigen, obwohl mehrere derartige Formkörper durchströmt wurden, wobei die Verteilung der Strömungsgeschwindigkeit über den Querschnitt der Packung höchst unterschiedlich sein kann. Eine Querverteilung der Strömung innerhalb der Packung findet überhaupt nicht oder nur in sehr geringem Ausmaß statt.

Sehr problematisch werden derartige Strömungsunterschiede, wenn ein Einzelkanal lokal verstopft ist. Es zeigt sich, daß nicht nur dieser Einzelkanal nicht mehr durchströmt wird, sondern auch die Einzelkanäle jener vor- und nachgeschalteten Formkörper, die auf derselben Achse oder in der Umgebung derselben Achse des verstopften Kanals liegen, wesentlich langsamer als den durchschnittlichen Strömungsgeschwindigkeiten entsprechend durchströmt werden. Vereinfacht ausgedrückt führt eine lokale Verstopfung eines Einzelkanals eines einzelnen Formkörpers auch zu einer Verstopfung aller auf derselben Achse liegenden Kanäle aller vor- und nachgeschalteten Formkörper.

Die beschriebene, ungleichmäßige Durchströmung einer derartigen Packung führt beispielsweise dazu, daß der gewünschte Tauschprozeß zwischen einem strömenden Medium und den Formkörpern in einzelnen Bereichen entweder überhaupt nicht oder zumindest nur in sehr geringem Ausmaß stattfindet, was letztendlich bedeutet, daß diese gering durchströmten Bereiche für den Tauschprozeß nicht oder nicht ausreichend bzw. vollständig zur Verfügung stehen. Dadurch verschlechtert sich der Wirkungsgrad des gewünschten Tauschprozesses, was nur durch eine Vergrößerung des Gesamtvolumens bzw. der Gesamtoberfläche kompensiert werden kann.

Bei thermischen Anwendungen, wenn z.B. derartige Formkörper als thermische Regeneratoren verwendet werden, führt eine ungleichmäßige Durchströmung der Packung aber auch zu sehr unterschiedlichen Temperaturen innerhalb unmittelbar benachbarter Zonen. Dies deshalb, da in einem Kanal Heißluft strömt, die ihre thermische Energie an die Kanalwandung abgibt und das Material des Formkörpers dort aufheizt, während in einem nicht oder schlecht durchströmten Kanal keine äquivalente Wärmezufuhr erfolgt. Die Folge der daraus resultierenden Temperaturunterschiede sind Wärmespannungen, die je nach Material zu Verformungen oder zur lokalen Zerstörung führen können.

Zur Lösung der Probleme einer fehlenden Querströmung wurde beispielsweise vorgeschlagen, zwischen einzelnen, hintereinander bzw. in Serie angeordneten Formkörpern getrennte Abstandhalter einzusetzen, wobei unmittelbar einsichtig ist, daß eine Positionierung derartiger getrennter Abstandhalter nicht nur äußerst zeitaufwendig ist, sondern daß derartige Abstandhalter, welche üblicherweise keine durchströmbaren Kanäle bzw. Durchtrittsöffnungen aufweisen, zusätzliche Strömungswiderstände bewirken und gegebenenfalls verschoben werden können, so daß die relative Positionierung zwischen benachbarten bzw. hintereinander angeordneten Formkörpern nicht mit der erforderlichen Zuverlässigkeit aufrecht erhalten werden kann.

Die vorliegende Erfindung zielt daher darauf ab, einen Formkörper der eingangs genannten Art dahingehend weiterzubildern, daß insbesondere ohne Vorsehen von zusätzlichen Elementen, wie Abstandhaltern, bei Anordnung von mehreren Formkörpern hintereinander bzw. in Serie zwischen einzelnen, unmittelbar hintereinander angeordneten bzw. unmittelbar aneinander anschließenden bzw. angrenzenden Formkörpern eine Querströmung des durch die Formkörper geleiteten Fluids möglich wird, um die eingangs genannten Probleme, insbesondere einer ungleichmäßigen Strömungsverteilung, in einer aus einer Vielzahl von Formkörpern bestehenden Packung als auch eine beispielsweise unterschiedliche Belastung der Formkörper zu vermeiden.

Zur Lösung dieser Aufgaben sind bei Formkörpern der eingangs genannten Art auf wenigstens einer Endfläche wenigstens zwei im wesentlichen gleiche Höhe aufweisende von mehreren Kanälen (2) durchstoßene Erhebungen vorgesehen, zwischen welchen wenigstens eine von mehreren Kanälen (2) durchstoßene Vertiefung liegt, wobei die Vertiefung am Außenumfang des Formkörpers mündet. Der Außenumfang ist die zu den Kanälen parallele Körpergrenze des Formkörpers. Die im wesentlichen zueinander parallelen Kanäle (2) sind somit sowohl in den Bereichen der Erhebungen, als auch im Bereich der Vertiefung bzw. der Vertiefungen bis an die durch die Endfläche gebildete Grenzfläche der Formkörper geführt und durchstoßen diese Grenzfläche. Die Erhebungen müssen bzw. die Vertiefung muss durch Schneiden, Fräsen oder Bürsten hergestellt werden. Dadurch, dass erfindungsgemäß auf wenigstens einer Endfläche wenigstens zwei im wesentlichen gleiche Höhe aufweisende Erhebungen vorgesehen sind, zwischen welchen wenigstens eine Vertiefung am in Richtung der Kanäle verlaufenden, den Formkörper begrenzenden Außenumfang mündet, ergibt sich unmittelbar, dass bei Anordnung einer Mehrzahl von Formkörpern hintereinander bzw. in Serie durch die Erhebungen und/oder Vertiefungen ein ausreichender Freiraum zwischen hintereinander angeordneten Formkörpern zur Ausbildung einer Querströmung zur Verfügung gestellt wird, ohne dass zusätzliche Elemente, wie beispielsweise Abstandshalter, Verwendung finden.

Darüber hinaus ist sichergestellt, daß in den Bereichen der Erhebungen bzw. Fortsätze als auch der Vertiefungen die im Inneren des Formkörpers angeordneten, im wesentlichen parallel zueinander verlaufenden Kanäle bzw. Durchtrittsöffnungen jeweils bis an die Grenzfläche bzw. Endfläche des Formkörpers geführt sind, so daß im Gegensatz zu bekannten Ausführungsformen, bei welchen getrennte oder an den Formkörpern selbst befestigte Abstandhalter eingesetzt werden, keine zusätzlichen Strömungswiderstände durch gegebenenfalls vollflächige Abstandhalter zwischen benachbarten Formkörpern eingebracht werden. Es steht somit selbst im Bereich der Erhebungen bzw. Fortsätze der gesamte Materialquerschnitt des Formkörpers für den gewünschten Austauschvorgang zur Verfügung, wobei darüber hinaus die Bereiche, welche als Erhebungen bzw. Fortsätze gegenüber den verbleibenden Teilbereichen der Endfläche ausgebildet sind, dazu dienen, daß sich zwischen jeweils zwei unmittelbar ohne Abstand aneinander angeordneten Formkörpern Hohlräume bzw.

Zwischenräume ausbilden. Wesentlich ist, daß dieser erfindungsgemäße Körper keinesfalls prismatisch ist, da er sich durch wenigstens eine bewußt uneben gestaltete Deckund/oder Grundfläche auszeichnet, also im Gegensatz zum prismatischen Körper mit definitionsgemäß ebenen Deck- und Grundflächen steht.

Für eine gleichmäßige Verteilung bzw. Ausbildung einer Querströmung ist gemäß einer bevorzugten Ausführungsform vorgesehen, daß die Erhebungen und die Vertiefungen eine symmetrische, beispielsweise gitterartige, Struktur ausbilden, wobei eine derartige symmetrische, beispielsweise gitterartige Struktur darüber hinaus ermöglicht, daß ein derartiger Formkörper nicht in einer speziellen Positionierung relativ zu benachbarten Formkörpern angeordnet werden muß.

Um insbesondere an Rändern bzw. Kanten von Erhebungen bzw. Fortsätzen gegebenenfalls störende Wirbeleffekte bzw. Verwirbelungen zu vermeiden, welche zu erhöhten Strömungsverlusten führen können, ist gemäß einer weiters bevorzugten Ausführungsform vorgesehen, daß die Erhebungen und Vertiefungen mit abgerundeten oder abgeschrägten Kanten bzw. Ecken ausgebildet sind. In diesem Zusammenhang wird insbesondere aus fertigungstechnischen Gründen gemäß einer weiters bevorzugten Ausführungsform vorgeschlagen, daß die Erhebungen oder Vertiefungen wellenartig, insbesondere sinusförmig, oder zick-zack-artig ausgebildet sind.

Für eine gezielte Ausbreitung einer Querströmung zwischen benachbarten bzw. hintereinander angeordneten Formkörpern, wodurch insbesondere eingangs erwähnte Zonen erhöhter bzw. herabgesetzter Strömungsgeschwindigkeit ausgeglichen bzw. deren Aufbau weitestgehend verhindert werden kann, wird gemäß einer weiters bevorzugten Ausführungsform vorgeschlagen, daß eine von Erhebungen und Vertiefungen gebildete, im wesentlichen regelmäßige bzw. symmetrische Struktur unter einem Winkel, insbesondere diagonal, zu einer von den Kanälen gebildeten, netzwerkartigen Struktur verläuft bzw. angeordnet ist. Eine derartige diagonale Anordnung der Erhebungen bzw. Fortsätze oder der Vertiefungen bzw. Ausnehmungen relativ zu einer netzwerkartigen Struktur der im Inneren des Formkörpers angeordneten Kanäle bzw. Durchtrittsöffnungen ergibt praktisch zwangsweise im Bereich der Endflächen eine gewisse Umlenkung und damit Querströmung im Bereich der aneinander angrenzenden Formkörper, so daß eine gleichmäßige Durchströmung einer von einer Vielzahl von nebeneinander und hintereinander angeordneten Formkörpern gebildeten Packung erzielbar ist.

Während im Prinzip die Ausbildung jeweils wenigstens einer Endfläche eines Formkörpers mit den erfindungsgemäßen vorgeschlagenen Erhebungen bzw. Fortsätzen und/oder Vertiefungen bzw. Ausnehmungen ausreichend ist, um bei einer aneinander anschließenden Anordnung von Formkörpern jeweils dazu dienen, daß sich zwischen benachbarten Formkörpern Hohlräume bzw. Zwischenräume bilden, wird erfindungsgemäß vorgeschlagen, daß beide Endflächen des Formkörpers mit Erhebungen und/oder Vertiefungen ausgebildet sind, wie dies einer weiters bevorzugten Ausführungsform des erfindungsgemäßen Formkörpers entspricht. Durch Vorsehen von Erhebungen bzw. Vertiefungen an beiden Endflächen kann nicht nur der Effekt der Bildung von Hohlräumen entsprechend vergrößert werden, sondern es können durch entsprechende Anordnung der Erhebungen bzw. Vertiefungen an aneinander angrenzenden Endflächen von benachbarten Formkörpern auch gewünschte Strömungseffekte, insbesondere im Hinblick auf eine gewünschte Ausbildung von Querströmungen erzielt werden. In diesem Zusammenhang wird gemäß einer weiters bevorzugten Ausführungsform vorgeschlagen, daß die Erhebungen und Vertiefungen an beiden Endflächen des Formkörpers zueinander spiegelsymmetrisch angeordnet sind.

Für eine einfache Ausrichtung bzw. Anordnung einer Mehrzahl von Formkörpern sowohl nebeneinander als auch hintereinander wird gemäß einer weiters bevorzugten Ausführungsform vorgeschlagen, daß der Formkörper eine rechtwinkelige, insbesondere quadratische, oder polygonale, insbesondere hexagonale, Außenkontur aufweist, so daß sich problemlos eine entsprechend dichte Packung von nebeneinander in einer Ebene liegenden Formkörpern erzielen läßt, an welche weitere Ebenen von jeweils einer Mehrzahl von Formkörpern beabstandet durch die Erhebungen und/oder Vertiefungen an jeweils wenigstens einer Endfläche anschließen.

Wie eingangs bereits angedeutet, können erfindungsgemäße Formkörper in einer Vielzahl von Anwendungen Verwendung finden, wobei gemäß einer bevorzugten Ausführungsform vorgeschlagen wird, daß der Formkörper beispielsweise als Katalysator oder als Katalysatorträger und/oder als Regeneratorelement in thermischen Regeneratoren eingesetzt bzw. verwendet wird, wie dies bevorzugt vorgeschlagen wird.

Zur Erzielung bzw. Unterstützung gewünschter Austauschprozesse wird darüber hinaus gemäß einer weiters bevorzugten Ausführungsform vorgeschlagen, daß ein erfindungsgemäßer Formkörper als chemisch aktives Element oder als Träger für chemisch aktive Substanzen verwendet wird oder daß ein erfindungsgemäßer Formkörper als ein biologisch aktives Element oder als Träger für biologisch aktive Organismen oder biologisch aktive Substanzen verwendet wird.

Ein erfindungsgemäßer Formkörper kann nicht nur mit einer biologisch aktiven Substanz oder mit einer chemisch/katalytisch aktiven Substanz beschichtet werden, sondern sogar aus einer solchen Substanz gefertigt werden. Beispielsweise kann hiebei genannt werden: DeNOx-Katalysator aus TiO₂-V₂O₅ Gemisch, Bakterien- bzw. Pilzsporenträger aus Holzspanmasse, welche plastisch gemacht werden und in die gewünschte Form stranggepreßt werden können; Kalkkörper für die H₂SO₃ (H₂SO₄) Reduktion. Es können praktisch sehr viele Stoffe pulverförmig zermahlen, anschließend plastifiziert und dann im plastischen Zustand in sehr komplexe Formen stranggepreßt werden. Viele Stoffe, die dann je nach Rezeptur eine bestimmte chemische, katalytische, biologische oder auch physikalische Eigenschaft, z.B. Wärmespeicherung haben, lassen sich auf diese Weise als Formkörper in der beschriebenen Weise herstellen. Derartige Formkörper eignen sich für alle Prozesse, bei denen große Kontaktoberflächen bei gleichzeitig geringem Volumenbedarf und geringe Durchströmverluste gefordert sind.

Die Erfindung wird nachfolgend anhand von in der beiliegenden Zeichnung schematisch dargestellten Ausführungsbeispielen näher erläutert. In dieser zeigen:
Fig. 1 eine perspektivische Ansicht einer ersten Ausführungsform eines erfindungsgemäßen Formkörpers;
Fig. 2 in einer zu Fig. 1 ähnlichen, perspektivischen Darstellung eine abgewandelte Ausführungsform eines erfindungsgemäßen Formkörpers;
Fig. 3 in einer wiederum zu Fig. 1 ähnlichen Darstellung eine weitere abgewandelte Ausführungsform eines erfindungsgemäßen Formkörpers, wobei an beiden Endflächen Erhebungen und/oder Vertiefungen vorgesehen sind; und
Fig. 4 in einer wiederum zu Fig. 1 ähnlichen Darstellung eine weitere abgewandelte Ausführungsform eines erfindungsgemäßen Formkörpers.

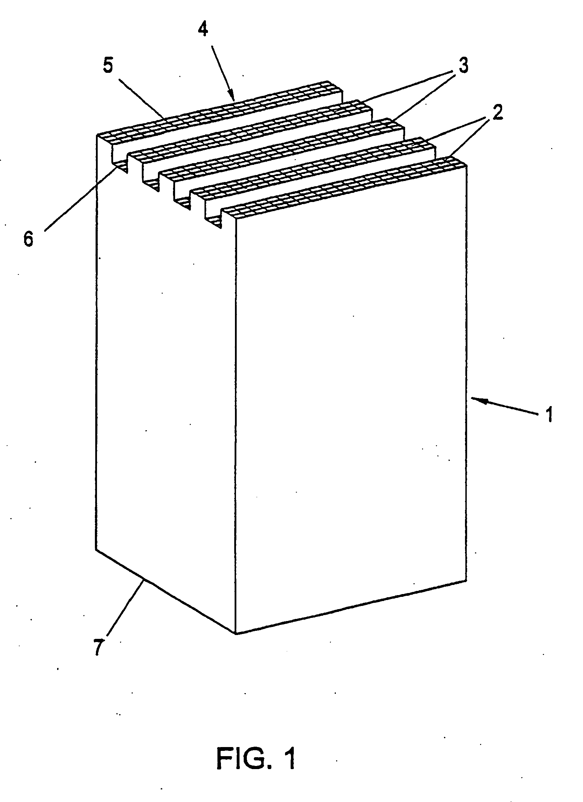

In Fig. 1 ist allgemein mit 1 ein Formkörper bezeichnet, welcher einen im wesentlichen quadratischen Außenumriß aufweist, wobei im Inneren des Formkörpers 1 eine Vielzahl von Durchtrittsöffnungen bzw. Kanälen 2 vorgesehen ist, welche jeweils durch Stege bzw. Rippen 3 voneinander getrennt sind. Die Kanäle bzw. Durchtrittsöffnungen 2 verlaufen im wesentlichen parallel zueinander und entlang der Längsachse des Formkörpers 1. Derartige Formkörper 1 dienen beispielsweise für Austauschprozesse zwischen einem Fluid, welches durch das Innere des Formkörpers 1 durch die Vielzahl von Kanälen bzw. Durchtrittsöffnungen 2 strömt, und einer entsprechend großen Oberfläche über die Vielzahl von Stegen bzw. Rippen 3 bei einem verhältnismäßig geringen Gesamtvolumen des Formkörpers 1. Derartige Formkörper 1 können beispielsweise als Katalysator oder Katalysatorträger oder als Regeneratorelement in thermischen Regeneratoren eingesetzt werden.

Darüber hinaus können die Stege bzw. Rippen 3 mit einer biologisch aktiven Substanz oder einem biologisch aktiven Organismus beschichtet sein. Alternativ können für entsprechende Einsatzzwecke die Stege bzw. Rippen 3 zwischen benachbarten Kanälen 2 mit einem chemisch aktiven Element oder einer chemisch aktiven Substanz zur Erzielung einer entsprechenden chemischen Reaktion bei der Durchleitung eines Fluids durch die Kanäle bzw. Durchtrittsöffnungen 2 beschichtet bzw. versehen sein.

Wie aus Fig. 1 ersichtlich, ist zur Bereitstellung einer entsprechend großen Austauschoberfläche bei relativ geringem Gesamtvolumen des Formkörpers 1 der lichte Durchtrittsquerschnitt der einzelnen Kanäle bzw. Durchtrittsöffnungen 2 entsprechend klein.

In Fig. 1 ist schematisch dargestellt, daß an einer mit 4 bezeichneten Endfläche des Formkörpers 1 eine Mehrzahl von nebeneinander angeordneten Erhebungen 5 sowie Vertiefungen 6 vorgesehen ist, wobei die Durchtrittskanäle 2 jeweils im Bereich der Erhebungen 5 bzw. der gegenüber den Erhebungen 5 einen größeren Querschnitt aufweisenden Vertiefungen 6 münden bzw. enden. An der der Endfläche 4 gegenüberliegenden Endfläche 7 ist der in Fig. 1 dargestellte Formkörper 1 mit einer im wesentlichen normal auf die Längsachse der Durchtrittskanäle 2 sowie des Formkörpers 1 verlaufenden, einheitlichen bzw. ebenen Abschlußebene ausgebildet.

Bei einem Stapel von derartigen Formkörpern 1 bzw. Anordnung in Serie oder hintereinander gelangt ein weiterer Formkörper 1 mit seiner im wesentlichen ebenen Abschluß- bzw. Bodenfläche 7 in Anlage an die Endfläche 4, so daß insbesondere die Erhebungen 5 als integrierte Abstandhalter zu einem unmittelbar anschließenden, weiteren Formkörper 1 zur Ausbildung einer Packung von Formkörpern 1 dienen. Insbesondere im Bereich der Vertiefungen bzw. Ausnehmungen 6 läßt sich somit eine entsprechende Querströmung zwischen einzelnen, jeweils in Längsrichtung des Formkörpers 1 verlaufenden Kanälen bzw. Durchtrittsöffnungen 2 erzielen, so daß eine Ausbildung von Zonen bzw. Bereichen unterschiedlicher Strömungsgeschwindigkeit und/oder beispielsweise unterschiedlicher Erwärmung bei Verwendung eines derartigen Formkörpers 1 als Regeneratorelement unterbunden werden kann. Für den Fall, daß in einer weiteren Ebene ein derartiger Formkörper 1 um 90° versetzt zu dem vorangehenden Formkörper 1 angeordnet wird, läßt sich unmittelbar erkennen, daß die wiederum einen größeren Querschnitt aufweisenden Vertiefungen bzw. Ausnehmungen 6 nunmehr im wesentlichen quer zu den Erhebungen 5 und Vertiefungen 6 der vorangehenden Trennebene zwischen benachbarten Formkörpern 1 verlaufen, so daß sich zwischen einzelnen Ebenen von Formkörpern 1 durch unterschiedlich gerichtete Querströmungen ein gewünschter Vermischungseffekt erzielt läßt.

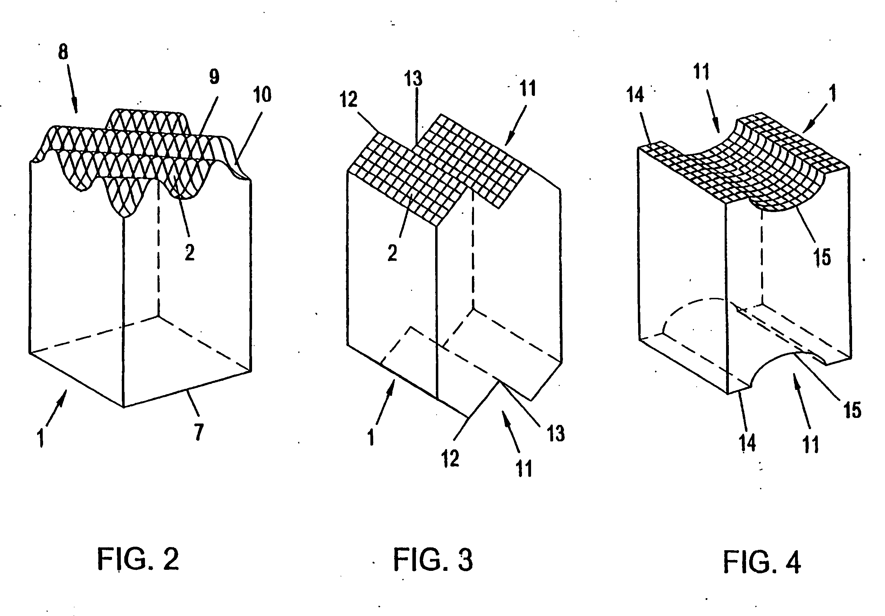

Bei der in Fig. 2 dargestellten Ausführungsform weist ein wiederum mit 1 bezeichneter Formkörper ebenfalls eine im wesentlichen ebene Bodenfläche 7 auf, während die zweite Endfläche 8 mit wellenartigen Erhebungen 9 sowie Vertiefungen 10 ausgebildet ist, wobei die wellenartigen Erhebungen und Vertiefungen 9 bzw. 10 beispielsweise sinusförmig ausgebildet sein können. Es ergibt sich auch bei dieser Ausführungsform durch die Erhebungen und Vertiefungen 9 bzw. 10 ein entsprechender Abstandhaltereffekt zu einem daran anschließenden, weiteren Formkörper 1, welcher beispielsweise über eine wiederum ebene Bodenfläche 7 daran anschließt, so daß Querströmungen zwischen aneinander anschließenden Formkörpern 1 unmittelbar erzielbar sind. In Fig. 2 ist weiters ersichtlich, daß die Erhebungen und Vertiefungen 9 bzw. 10 im wesentlichen diagonal zu der netzwerkartigen Struktur der Durchtrittskanäle 2 als auch zu der Außenkontur des wiederum im wesentlichen quadratischen Formkörpers 1 verlaufen, so daß beispielsweise wiederum bei verdrehter bzw. versetzter Anordnung in einer weiteren Ebene zwischen hintereinander angeordneten Formkörpern 1 der oben erwähnte Vermischungseffekt durch Ausbildung jeweils einer Querströmung in unterschiedlichen Richtungen erzielbar ist.

In Fig. 3 ist eine weitere abgewandelte Ausführungsform eines Formkörpers 1 dargestellt, welcher an beiden Endflächen 11 jeweils sowohl mit abgeschrägten bzw. geneigten Erhebungen als auch Vertiefungen 12 bzw. 13 ausgebildet ist, wobei die Durchtrittskanäle 2 wiederum im Bereich der geneigt verlaufenden Erhebungen bzw. Vertiefungen 12 bzw. 13 enden.

Durch Ausbilden beider Endflächen 11 mit entsprechenden Erhebungen als auch Vertiefungen 12 läßt sich bei einer Anordnung bzw. Stapelung derartiger Formkörper 1 hintereinander der durch die Erhebungen als auch Vertiefungen 12 bzw. 13 erzielbare Abstandhaltereffekt entsprechend vergrößern.

Auch bei der in Fig. 4 dargestellten, weiteren, abgewandelten Ausführungsform eines Formkörpers 1 sind beide Endflächen 11 mit Erhebungen 14 sowie einer im wesentlichen konkaven Vertiefung 15 versehen, so daß sich wiederum der gewünschte Abstandhaltereffekt zur Ausbildung einer Querströmung bei Anordnung derartiger Formkörper 1 hintereinander bzw. in Serie erzielen läßt.

Die Ausbildung der Erhebungen bzw. Fortsätzen als auch der Vertiefungen bzw. Ausnehmungen 5, 6, 9, 10, 12, 13 sowie 14, 15 an den Endflächen eines Formkörpers 1 kann bereits im plastischen Zustand bei Herstellung des Formkörpers 1 mittels eines Formwerkzeugs in die gewünschte Konfigurierung der Endflächen mit entsprechenden Erhebungen bzw. Fortsätzen als auch Vertiefungen bzw. Ausnehmungen erfolgen oder sie kann in einem weiteren Bearbeitungsschritt, insbesondere mechanisch, beispielsweise durch Schneiden, Fräsen, Bürsten oder dgl., in die gewünschte Form und Konfiguration hergestellt werden.

## Patentansprüche

1. Stapelbarer Formkörper mit einer Mehrzahl von im inneren im wesentlichen parallel zueinander verlaufenden, durchgehenden Kanälen (2) und einem von, zu den Kanälen im Wesentlichen parallel verlaufenden, Erzeugenden gebildeten Außenumfang, wobei wenigstens eine Endfläche (4,8,11) des Formkörpers, an welcher die durchgehenden Kanäle (2) münden, mit von einer auf die Achsen der Kanäle (2) normal stehenden Ebene vorragenden Erhebungen (5, 9,12,14) und/oder gegenüber dieser Ebene abgesetzten Vertiefungen (6, 10, 13, 15) ausgebildet ist, wobei auf wenigstens einer Endfläche (4,8,11) wenigstens zwei im wesentlichen gleiche Höhe aufweisende Erhebungen (5, 9, 12, 14) vorgesehen sind, zwischen welchen wenigstens eine von mehreren Kanälen (2) durchstoßene Vertlefung (6, 10, 13, 15) am, in Richtung der Kanäle (2) verlaufenden, den Formkörper begrenzenden Außenumfang mündet, wobei die im wesentlichen parallel zueinander verlaufenden Kanäle (2) in den Bereichen der Erhebungen (5, 9, 12, 14) als auch der Vertiefungen (6, 10, 13, 15) jeweils bis an die Grenzfläche des Formkörpers geführt sind, wobei die Erhebungen (5, 9, 12, 14) bzw. Vertiefungen (6, 10, 13, 15) der Grenzfläche durch Schneiden, Fräsen oder Bürsten hergestellt sein müssen.

2. Formkörper nach Anspruch 1, **dadurch gekennzeichnet, dass** die Erhebungen (5, 9, 12, 14) und die Vertiefungen (6, 10, 13, 15) eine symmetrische, beispielsweise gitterartige, Struktur ausbilden.

3. Formkörper nach Anspruch 1 oder 2, **dadurch gekennzeichnet, dass** die Erhebungen (9, 12, 14) und Vertiefungen bzw. Ausnehmungen (10, 13, 15) mit abgerundeten oder abgeschrägten bzw. geneigten Kanten bzw. Ecken ausgebildet sind.

4. Formkörper nach Anspruch 3, **dadurch gekennzeichnet, dass** die Erhebungen (9,12) oder Vertiefungen (10, 13) wellenartig, insbesondere sinusförmig, oder zickzack-artig ausgebildet sind.

5. Formkörper nach einem der Ansprüche 1 bis 4, **dadurch gekennzeichnet, dass** eine von Erhebungen (9) und Vertiefungen (10) gebildete, im wesentlichen regelmäßige bzw, symmetrische Struktur unter einem Winkel, insbesondere diagonal, zu einer von den Kanälen bzw. Durchtrittsöffnungen (2) gebildeten, netzwerkartigen Struktur verläuft bzw. angeordnet ist.

6. Formkörper nach einem der Ansprüche 1 bis 5, **dadurch gekennzeichnet, dass** beide Endflächen (11) des Formkörpers (9) mit Erhebungen (12, 14) und/oder Vertiefungen (13, 15) ausgebildet sind.

7. Formkörper nach Anspruch 6, **dadurch gekennzeichnet, dass** die Erhebungen (12, 14) und Vertiefungen (13,15) an beiden Endflächen (11) des Formkörpers (1) zueinander spiegelsymmetrisch angeordnet sind.

8. Formkörper nach einem der Ansprüche 1 bis 7, **dadurch gekennzeichnet, dass** der Formkörper (1) eine rechtwinkelige, insbesondere quadratische, oder polygonale, insbesondere hexagonale, Außenkontur aufweist.

9. Verwendung eines Formkörpers nach einem der Ansprüche 1 bis 8 als Katalysator oder als Katalysatorträger.

10. Verwendung eines Formkörpers nach einem der Ansprüche 1 bis 8 als Regeneratorelement in thermischen Regeneratoren.

11. Verwendung eines Formkörpers nach einem der Ansprüche 1 bis 8 als chemisch aktives Element oder als Träger für chemisch aktive Substanzen.

12. Verwendung eines Formkörpers nach einem der Ansprüche 1 bis 8 als ein biologisch aktives Element oder als Träger für biologisch aktive Organismen oder biologisch aktive Substanzen.

## Claims

1. A stackable shaped body with a plurality of continuous channels (2), which substantially run In parallel to one another, on the inside, and an outer circumference formed by generatrixes, which substantially run In parallel to the channels, whereat at least one end face (4, 8, 11) of the shaped body, at which the continuous channels (2) end, is designed with elevations (5, 9, 12, 14) protruding from a plane standing normal to the axes of the channels (2) and/or recesses (6, 10, 13, 15) offset in relation to this plane, whereat on at least one end face (4, 8, 11) at least two elevations (5, 9, 12, 14) having substantially the same height are provided, between which at least one recess (6, 10, 13, 15) pierced by several channels (2) ends at the outer circumference bordering the shaped body, which outer circumference runs in the direction of the channels (2), whereat the channels (2), which substantially run In parallel to one another, are respectively lead up to the boundary surface of the shaped body in the areas of the elevations (5, 9, 12, 14) as well as of the recesses (6, 10, 13, 15), whereat the elevations (5, 9, 12, 14) or recesses (6, 10, 13, 15), respectively, of the boundary surface must be manufactured by cutting, milling or brushing.

2. The shaped body according to Claim 1, **characterised in that** said elevations (5, 9, 12, 14) and said recesses (6, 10, 13, 15) form a symmetrical, for example lattice-like, structure.

3. The shaped body according to Claims 1 or 2, **characterised in that** said elevations (9, 12, 14) and recesses or clearances (10, 13, 15), respectively, are formed with chamfered or bevelled or slanted, respectively, edges or corners, respectively.

4. The shaped body according to Claim 3, **characterised in that** said elevations (9, 12) or recesses (10, 13) are formed In a wavelike, in particular sinusoidal or zigzag-like manger.

5. The shaped body according to one of the Claims 1 to 4, **characterised in that** a substantially regular or symmetrical, respectively, structure formed by elevations (9) and recesses (10) runs or is arranged, respectively, at an angle, in particular diagonally to a network-like structure formed by said channels or openings (2), respectively.

6. The shaped body according to one of the Claims 1 to 5, **characterised In that** both end faces (11) of said shaped body (9) are formed with elevations (12, 14) and/or recesses (13, 15).

7. The shaped body according to Claim 6, **characterised in that** said elevations (12, 14) and recesses (13, 15) are arranged mirror-symmetrically to one another at both end faces (11) of said shaped body (1).

8. The shaped body according to one of the Claims 1 to 7, **characterised in that**the shaped body (1) has a rectangular, in particular square, or polygonal, in particular hexagonal outer contour.

9. The use of a shaped body according to one of the Claims 1 to 8 as a catalyst or as a catalyst carrier.

10. The use of a shaped body according to one of the Claims 1 to 8 as a regenerator element in thermal regenerators.

11. The use of a shaped body according to one of the Claims 1 to 8 as a chemically active element or as a carrier for chemically active substances.

12. The use of a shaped body according to one of the Claims 1 to 8 as a biologically active element or as a carrier for biologically active organisms or biologically active substances.

## Revendications

1. Corps moulé empilable avec plusieurs canaux continus et essentiellement parallèles à l'intérieur (2) et une circonférence extérieure formée par des génératrices essentiellement parallèles aux canaux, au moins l'une des surfaces terminales (4, 8, 11) du corps moulé où aboutissent les canaux continus (2) étant munie d'éminences (5, 9, 12, 14) saillissant sur un plan perpendiculaire par rapport aux axes des canaux (2) et/ou de creux abaissés par rapport à ce plan (6, 10, 13, 15), sur au moins l'une des surfaces terminales (4, 8, 11) étant prévues deux éminences d'une hauteur essentiellement identique (5, 9, 12, 14) entre lesquelles au moins un creux (6, 10, 13, 15) traversé par plusieurs canaux (2) aboutit sur la circonférence extérieure dirigée vers les canaux (2) et limitant le corps moulé, les canaux essentiellement parallèles (2) allant jusqu'aux surfaces limites du corps moulé dans les zones des éminences (5, 9, 12, 14) et des creux (6, 10, 13, 15), les éminences (5, 9, 12, 14) et creux (8, 10, 13, 15) sur la surface limite devant être créés en coupant, fraisant ou brossant.

2. Corps moulé selon la revendication 1, **caractérisé en ce que** les éminences (5, 9, 12, 14) et les creux (8, 10, 13, 15) forment une structure symétrique ressemblant par exemple à une grille.

3. Corps moulé selon la revendication 1 ou 2 **caractérisé en ce que** les éminences (9, 12, 14) et les creux ou évidements (10, 13, 15) ont des bords et/ou coins arrondis, biseautés ou bien inclinés.

4. Corps moulé selon la revendication 3, **caractérisé en ce que** les éminences (9, 12) ou les creux (10, 13) sont de forme ondulée, notamment sinusoïdale, ou de forme zigzag.

5. Corps moulé selon l'une des revendications 1 à 4, **caractérisé en ce qu'**une structure essentiellement régulière ou symétrique formée par les éminences (9) et creux (10) va et/ou est positionnée dans un certain angle, et notamment en diagonale, par rapport à une structuré ressemblant à une résille qui est formée par les canaux et/ou les ouvertures de passage (2).

6. Corps moulé selon l'une des revendications 1 à 5, **caractérisé en ce que** les deux surfaces terminales (11) du corps moulé (9) sont munies d'éminences (12, 14) et/ou de creux (13, 15). '

7. Corps moulé selon la revendication 6, **caractérisé en ce que** les éminences (12, 14) et les creux (13, 15) sur toutes les deux surfaces terminales (11) du corps moulé (1) sont positionnés inversement symétriques l'un(e) par rapport à l'autre.

8. Corps moulé selon l'une des revendications 1 à 7, **caractérisé en ce que** le corps moulé (1) a un contour extérieur rectangulaire, notamment carré, ou polygonale, notamment hexagonale.

9. Utilisation d'un corps moulé selon l'une des revendications 1 à 8 en tant que catalyseur ou en tant que support de catalyseur.

10. Utilisation d'un corps moulé selon l'une des revendications 1 à 8 en tant qu'élément de régénérateur dans des régénérateurs thermiques.

11. Utilisation d'un corps moulé selon l'une des revendications 1 à 8 en tant qu'élément chimiquement actif ou an tant que support pour des substances chimiquement actives.

12. Utilisation d'un corps moulé selon l'une des revendications 1 à 8 en tant qu'élément biologiquement actif ou en tant que support pour des organismes biologiquement actifs ou des substances biologiquement actives.
